# EUROPEAN PATENT APPLICATION

(11) **EP 3 229 124 A1**
(43) Date of publication of application: **11.10.2017**
(21) Application number: 14909556.4
(22) Date of filing: 31.12.2014
(51) Int. Cl.: G06F 3/0488

(54) **METHOD FOR CONTROLLING PLAYING PROGRESS OF MULTIMEDIA FILE AND TERMINAL**

(71) Applicant: Huawei Technologies Co., Ltd., Longgang District Shenzhen, Guangdong 518129 (CN)
(72) Inventor: LIU, Tao, Shenzhen Guangdong 518129 (CN)
(74) Representative: Epping - Hermann - Fischer
(86) International application number: PCT/CN2014/096062
(87) International publication number: WO 2016/106750

(57) **Abstract**

A method and a terminal for controlling multimedia file play progress are provided. The method includes: receiving, by a terminal in a process of playing a multimedia file, a leftward/rightward slide operation performed by a user in a first area on a current play screen; obtaining data related to the slide operation; determining, according to a correspondence between an adjustment speed and a vertical coordinate of a track of the slide operation on the touchscreen, the adjustment speed corresponding to the vertical coordinate, where a value of the adjustment speed depends on a value of the vertical coordinate; determining, according to a slide direction, a direction of progress control performed on current play progress of the multimedia file; and determining a progress adjustment value according to the slide distance and the adjustment speed corresponding to the vertical coordinate, and performing progress control on the current play progress of the multimedia file in the determined direction of progress control according to the progress adjustment value.

## Description

### TECHNICAL FIELD

The present invention relates to the field of computer technologies, and in particular, to a method and a terminal for controlling multimedia file play progress.

### BACKGROUND

With development of portable terminals such as a smart phone and a Pad (a tablet computer), more users use portable terminals to play music or watch a video. In a process in which a user plays music or watches a video, the user may fast-forward or rewind the audio or the video at any time according to his or her requirement. Screens of most portable terminals are touchscreens. Therefore, how to effectively control audio or video play progress on a touchscreen is a problem that needs to be resolved.

Currently, in most applications, a horizontal progress bar is set on a page to implement control of play progress of a multimedia (such as audio or a video). The progress bar represents entire play progress of the audio or the video. A button exists in the progress bar, and a location of the button in the progress bar represents current play progress of the audio or the video. The control of the play progress of the audio or the video is implemented by holding and dragging the button leftward or rightward, or by tapping a location in the progress bar to move the button to the location.

However, a size of the portable terminal is limited, a size of the touchscreen is also limited, and accordingly, a length of the progress bar is also limited due to the size of the touchscreen. In addition, a finger of a person is relatively wide. Therefore, when adjusting progress, the user needs to drag a button with a very small area on the limited progress bar. In this case, precise positioning of play progress cannot be implemented. In addition, as duration of an audio/video file (such as a video file corresponding to a movie) increases, implementation of precise adjustment of play progress is increasingly complex. Therefore, when duration of an audio/video file exceeds specific duration, it is more difficult to implement precise fast-forward/rewind control of the play progress of the audio/video file.

### SUMMARY

To implement precise control of multimedia file play progress, embodiments of the present invention provide a method and a terminal for controlling the multimedia file play progress.

According to a first aspect, an embodiment of the present invention provides a method for controlling multimedia file play progress, where the method includes:
receiving, by a terminal in a process of playing a multimedia file, a leftward/rightward slide operation performed by a user in a first area on a current play screen by using a touchscreen, where the first area is an area, other than an area in which a play progress bar is displayed, in an area that is on the current play screen and in which a slide operation of the user can be received;
obtaining data related to the slide operation, where the data includes a vertical coordinate of a track of the slide operation on the touchscreen, and a slide direction and a slide distance that are of the slide operation;
determining, according to a correspondence between an adjustment speed and the vertical coordinate of the track of the slide operation on the touchscreen, the adjustment speed corresponding to the vertical coordinate, where a value of the adjustment speed depends on a value of the vertical coordinate, and the adjustment speed is a progress adjustment value that is for performing progress control on multimedia file play progress and that is corresponding to per unit sliding distance;
determining, according to the slide direction, a direction of progress control performed on current play progress of the multimedia file, and if the slide direction of the slide operation is leftward, determining to perform rewind progress control on the multimedia file; or if the slide direction of the slide operation is rightward, determining to perform fast-forward progress control on the multimedia file; and
determining, according to the slide distance and the adjustment speed corresponding to the vertical coordinate, a progress adjustment value that is for performing progress control on the current play progress of the multimedia file, and performing progress control on the current play progress of the multimedia file in the determined direction of progress control according to the progress adjustment value.

With reference to the first aspect, in a first possible implementation manner of the first aspect, the first area is divided into at least two regions in a vertical direction according to a preset rule, a vertical coordinate in each region falls within a preset threshold range, each region is corresponding to an adjustment speed, and adjustment speeds corresponding to all regions gradually increase or decrease in the vertical direction as a value of a vertical left edge changes; and
the determining, according to a correspondence between an adjustment speed and the vertical coordinate of the track of the slide operation on the touchscreen, the adjustment speed corresponding to the vertical coordinate is specifically:
determining an adjustment speed corresponding to a first region in the at least two regions when the vertical coordinate of the track of the slide operation on the touchscreen falls in the first region.

With reference to the first possible implementation manner of the first aspect, in a second possible implementation manner, the method further includes: when an operation performed by the user on the current play screen is received, displaying, in the at least two regions, adjustment speeds corresponding to the regions for prompting.

With reference to the first possible implementation manner or the second possible implementation manner of the first aspect, in a third possible implementation manner, that the first area is divided into at least two regions in a vertical direction according to a preset rule is specifically:
dividing the first area into regions in the vertical direction according to total duration of the multimedia file that is currently being played; or
dividing the first area into regions in the vertical direction according to remaining duration of the multimedia file that is currently being played; or
dividing the first area into regions in the vertical direction according to total duration and remaining duration that are of the multimedia file that is currently being played.

According to a second aspect, an embodiment of the present invention provides a terminal for controlling multimedia file play progress, where the terminal includes:
a touchscreen, configured to display content of a multimedia file played on the terminal; and
a processor, configured to: after receiving, in a process of playing the multimedia file, a leftward/rightward slide operation performed by a user in a first area on a current play screen by using the touchscreen, obtain data related to the slide operation, wherein the data comprises a vertical coordinate of a track of the slide operation on the touchscreen, a slide direction and a slide distance that are of the slide operation, and the first area is an area, other than an area in which a play progress bar is displayed, in an area that is on the current play screen and in which a slide operation of the user can be received;
determine, according to a correspondence between an adjustment speed and the vertical coordinate of the track of the slide operation on the touchscreen, the adjustment speed corresponding to the vertical coordinate, where a value of the adjustment speed depends on a value of the vertical coordinate, and the adjustment speed is a progress adjustment value that is for performing progress control on multimedia file play progress and that is corresponding to per unit sliding distance;
determine, according to the slide direction, a direction of progress control performed on current play progress of the multimedia file, and if the slide direction of the slide operation is leftward, determining to perform rewind progress control on the multimedia file; or if the slide direction of the slide operation is rightward, determining to perform fast-forward progress control on the multimedia file; and
determine, according to the slide distance and the adjustment speed corresponding to the vertical coordinate, a progress adjustment value that is for performing progress control on the current play progress of the multimedia file, and perform progress control on the current play progress of the multimedia file in the determined direction of progress control according to the progress adjustment value.

With reference to the second aspect, in a first possible implementation manner of the second aspect, the first area is divided into at least two regions in a vertical direction according to a preset rule, a vertical coordinate in each region falls within a preset threshold range, each region is corresponding to an adjustment speed, and adjustment speeds corresponding to all regions gradually increase or decrease in the vertical direction as a value of a vertical left edge changes; and
that the processor is configured to determine, according to a correspondence between an adjustment speed and the vertical coordinate of the track of the slide operation on the touchscreen, the adjustment speed corresponding to the vertical coordinate is specifically:
the processor is configured to determine an adjustment speed corresponding to a first region in the at least two regions when the vertical coordinate of the track of the slide operation on the touchscreen falls in the first region.

With reference to the first possible implementation manner of the second aspect, in a second possible implementation manner, the touchscreen is further configured to: when an operation performed by the user on the current play screen is received, display, in the at least two regions, adjustment speeds corresponding to the regions for prompting.

With reference to the second aspect or the first possible implementation manner of the second aspect, in a third possible implementation manner, that the first area is divided into at least two regions in a vertical direction according to a preset rule is specifically:
dividing the first area into regions in the vertical direction according to total duration of the multimedia file that is currently being played; or
dividing the first area into regions in the vertical direction according to remaining duration of the multimedia file that is currently being played; or
dividing the first area into regions in the vertical direction according to total duration and remaining duration that are of the multimedia file that is currently being played.

Compared with the prior art, the embodiments of the present invention have the following advantageous effects:

According to the method and the terminal provided in the embodiments of the present invention, a leftward/rightward slide operation performed by a user in a first area on a current play screen by using a touchscreen is received; an adjustment speed corresponding to a vertical coordinate of a track of the slide operation on the touchscreen is determined according to a correspondence between the adjustment speed and the vertical coordinate; a direction of progress control performed on current play progress of the multimedia file is determined according to the slide direction; a progress adjustment value that is for performing progress control on the current play progress of the multimedia file is determined according to the slide distance and the adjustment speed corresponding to the vertical coordinate; and progress control is performed on the current play progress of the multimedia file in the determined direction of progress control according to the progress adjustment value. Two dimensions, a horizontal dimension and a vertical dimension, of the touchscreen are used. That is, on the basis of using a width of the screen, a height of the screen is further used. A value of an adjustment speed depends on a value of a vertical coordinate of an operation performed by a user on the touchscreen. Operations performed by a user at different heights of the screen are corresponding to different adjustment speeds. The user may conveniently and flexibly select an adjustment speed by performing a simple slide operation at a specific height of the screen according to an actual need, so as to help the user better implement precise control of multimedia file play progress.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for controlling multimedia file play progress according to an embodiment of the present invention;
FIG. 2 is a schematic structural diagram of a terminal for controlling multimedia file play progress according to an embodiment of the present invention; and
FIG. 3 is a schematic diagram of an screen of content displayed on a screen of a terminal in a method for controlling multimedia file play progress according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

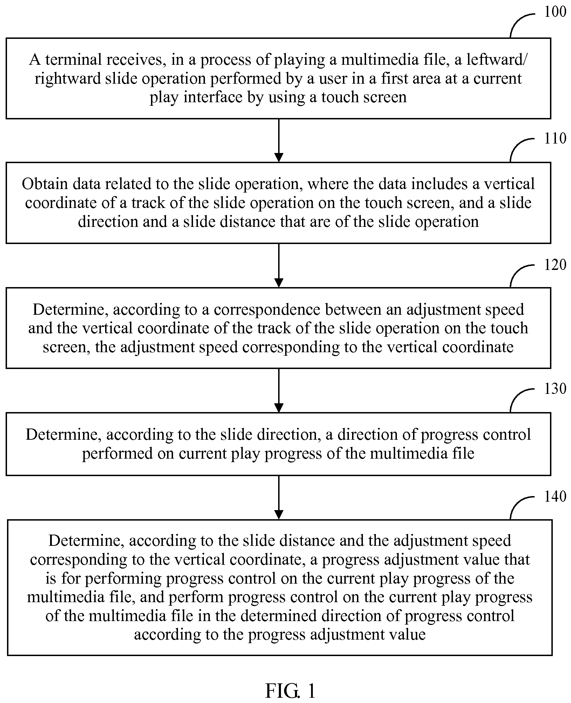

As shown in FIG. 1, in an embodiment of a method for controlling a multimedia file play progress provided in the present invention, the method may include the following steps:
S100. A terminal receives, in a process of playing a multimedia file, a leftward/rightward slide operation performed by a user in a first area on a current play screen by using a touchscreen.
   The first area is an area, other than an area in which a play progress bar is displayed, in an area that is on the current play screen and in which a slide operation of the user can be received.
S110. Obtain data related to the slide operation, where the data includes a vertical coordinate of a track of the slide operation on the touchscreen, and a slide direction and a slide distance that are of the slide operation.
S120. Determine, according to a correspondence between an adjustment speed and the vertical coordinate of the track of the slide operation on the touchscreen, the adjustment speed corresponding to the vertical coordinate, where a value of the adjustment speed depends on a value of the vertical coordinate, and the adjustment speed is a progress adjustment value that is for performing progress control on multimedia file play progress and that is corresponding to per unit sliding distance.
S130. Determine, according to the slide direction, a direction of progress control performed on current play progress of the multimedia file, and if the slide direction of the slide operation is leftward, determine to perform rewind progress control on the multimedia file; or if the slide direction of the slide operation is rightward, determine to perform fast-forward progress control on the multimedia file.
S140. Determine, according to the slide distance and the adjustment speed corresponding to the vertical coordinate, a progress adjustment value that is for performing progress control on the current play progress of the multimedia file, and perform progress control on the current play progress of the multimedia file in the determined direction of progress control according to the progress adjustment value.

According to the method provided in this embodiment of the present invention, a leftward/rightward slide operation performed by a user in a first area on a current play screen by using a touchscreen is received; an adjustment speed corresponding to a vertical coordinate of a track of the slide operation on the touchscreen is determined according to a correspondence between the adjustment speed and the vertical coordinate; a direction of progress control performed on current play progress of the multimedia file is determined according to the slide direction; a progress adjustment value that is for performing progress control on the current play progress of the multimedia file is determined according to the slide distance and the adjustment speed corresponding to the vertical coordinate; and progress control is performed on the current play progress of the multimedia file in the determined direction of progress control according to the progress adjustment value. Two dimensions, a horizontal dimension and a vertical dimension, of the touchscreen are used. That is, on the basis of using a width of the screen, a height of the screen is further used. A value of an adjustment speed depends on a value of a vertical coordinate of an operation performed by a user on the touchscreen. Operations performed by a user at different heights of the screen are corresponding to different adjustment speeds. The user may conveniently and flexibly select an adjustment speed by performing a simple slide operation at a specific height of the screen according to an actual need, so as to help the user better implement precise control of multimedia file play progress.

In another embodiment of the method provided in the present invention, the first area is divided into at least two regions in a vertical direction according to a preset rule, a vertical coordinate in each region falls within a preset threshold range, each region is corresponding to an adjustment speed, and adjustment speeds corresponding to all regions gradually increase or decrease in the vertical direction as a value of a vertical left edge changes.

The determining, according to a correspondence between an adjustment speed and the vertical coordinate of the track of the slide operation on the touchscreen, the adjustment speed corresponding to the vertical coordinate is specifically:
determining an adjustment speed corresponding to a first region in the at least two regions when the vertical coordinate of the track of the slide operation on the touchscreen falls in the first region.

Further the method may further include: when an operation performed by the user on the current play screen is received, displaying, in the at least two regions, adjustment speeds corresponding to the regions for prompting.

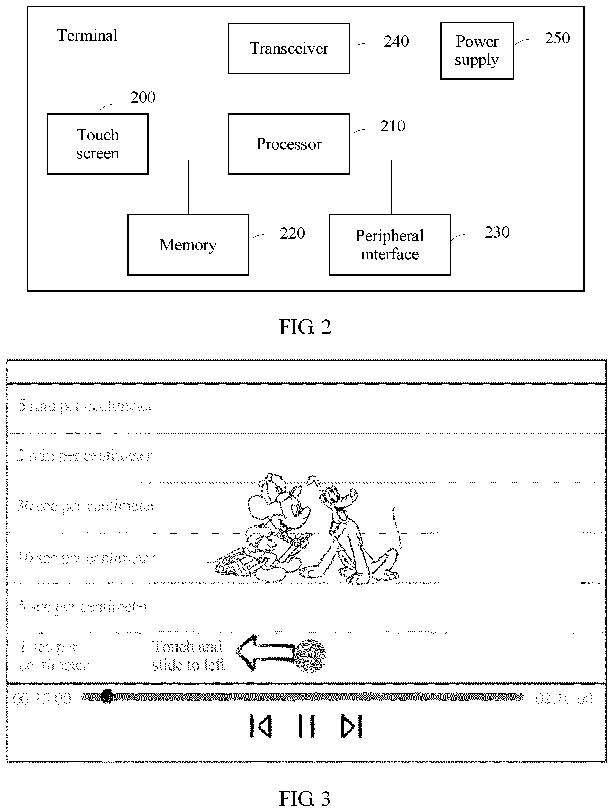

As shown in FIG. 3, optionally, when an operation performed by the user on the current play screen (such as the first area) is received, an adjustment speed corresponding to each region may be displayed in the region on the current play screen, so as to prompt the user. The user may perform a slide operation in a proper region selected according to a prompt message, so as to perform progress control on the multimedia file that is being played.

Further, that the first area is divided into at least two regions in a vertical direction according to a preset rule is specifically:
dividing the first area into regions in the vertical direction according to total duration of the multimedia file that is currently being played; or
dividing the first area into regions in the vertical direction according to remaining duration of the multimedia file that is currently being played; or
dividing the first area into regions in the vertical direction according to total duration and remaining duration that are of the multimedia file that is currently being played.

During region division, the remaining duration of the multimedia file that is currently being played may be used. Information about the remaining duration may be used to dynamically perform region division, that is, regions provided, according to different remaining durations, for operating by the user may be different. For example, region quantities are different, region intervals are different, or adjustment speeds corresponding to regions are different. The region division may be triggered based on an actual play situation, so as to provide an operable region that facilitates play progress control for the user, and improve flexibility of the solution and user experience.

In the prior art, the user may control play progress of a multimedia file (such as a video) by dragging a play progress bar. When the video is relatively long, an extremely short distance of dragging causes a relatively large change of the play progress. As a result, precise positioning or small fast-forward/rewind performed on the video is particularly difficult to implement. Nowadays, duration is more than 100 minutes for most movie videos, and may be more than three hours for a relatively long movie.

A movie with 100 minutes duration is used as an example. A length of a progress bar of a phone with a six-inch screen in a landscape mode is approximately 100 mm. In this case, 1 millimeter is corresponding to a one-minute video. It is difficult for a user to perform dragging within a distance less than 10 mm, and a slight drag may cause a more than 10 minutes change of a play progress. This causes a great problem in precise positioning and also causes great inconvenience to use by the user.

According to the method provided in this embodiment of the present invention, a user can perform a leftward/rightward slide on different vertical locations at an audio/video play screen, to implement more precise positioning as desired. If a user wants to mildly adjust video play progress, the user only needs to perform a leftward/rightward slide in an area close to the play progress bar, or if a user wants to adjust video play progress in a large scale, the user only needs to perform a leftward/rightward slide in an area that is slightly far away from the progress bar.

A schematic diagram of a specific screen is used as an example in the following to describe the method that is for controlling the multimedia file play progress and provided in this embodiment of the present invention.

FIG. 3 shows an example of screen content displayed on a touchscreen of a terminal in a process in which the terminal plays a video. For ease of understanding, FIG. 3 further shows a sign (such as an arrow in FIG. 3) of a slide operation performed by a user on the touchscreen, and the like. The top of the screen is a status bar, and this area is generally unavailable for a user operation. The bottom of the screen is an area in which a play progress bar is displayed, and generally, in addition to the play progress bar, a button such as a previous button, a next button, or a pause button is also displayed in the area that displays the play progress bar. An area that is available for a user operation is a video play area (corresponding to the foregoing first area) in the middle part.

In FIG. 3, the first area is divided into 6 rectangular areas (or regions) with a same height, and different areas are corresponding to different precisions. During a leftward/rightward slide, if a vertical coordinate of a slide operation is located in a bottom area, a slide of 1 cm is corresponding to 1-second video fast-forward/rewind, a second bottom area is corresponding to 5 sec/cm, a third bottom area is corresponding to 10 sec/cm, and so on; and a top area is corresponding to 5 min/cm. The precisions are increasingly lower.

An operator touches the screen to form a reference point (the grey filled circle shown in FIG. 3), and at this time, the video may be paused. Then a leftward slide (as shown in an arrow direction in FIG. 3) is performed by using the reference point as a start point. An area in which the filled circle is located is corresponding to "1sec per centimeter", that is, each time a leftward slide of 1 centimeter is performed, the video is rewinded by 1 second. Therefore, when the user performs a slide operation, the video is rewinded in extremely precise progress.

For a cell phone with a big screen of approximately 6 inches, a width of an area that is on the left or on the right of the middle of an operational area of the screen is approximately 6 cm. Therefore, video positioning may be accurate to less than 6 seconds. If the user needs to change progress of the video in a slightly larger scale, positioning accurate to less than half minute may be implemented in the second block from the bottom, positioning accurate to less than 1 minute may be implemented in the third block from the bottom, and positioning accurate to less than half an hour may be implemented in the top block.

In an actual use process, the user may be allowed to perform a cross-area slide. For example, a slide is originally performed in a fourth area, which is corresponding to a precision of half minute per centimeter, and when progress is adjusted to a specific place and positioning is about to be completed, the user may slide down to the first area, and in this case, the precision becomes 1 second per centimeter. Combination of areas may help the user to implement precise positioning in terms of a long time span. The user may continuously slide on the screen, and a finger does not leave the screen during the slide process; or the user may separately slide in multiple areas in a discontinuous manner, and performs progress control by using a combination of different precisions.

The embodiments of the present invention further provide a terminal configured to control multimedia file play progress. FIG. 2 shows an embodiment of the terminal provided in the present invention. In this embodiment, the terminal includes a touchscreen 200 and a processor 210 (there may be one or more processors that have a same or similar function or have different functions, and one processor is used as an example in the present invention), and the terminal may further include components such as a memory 220, a peripheral screen 230, a transceiver 240, and a power supply 250.

The touchscreen 200 is configured to display content of a multimedia file played on the terminal.

The processor 210 is configured to: after receiving, in a process of playing the multimedia file, a leftward/rightward slide operation performed by a user in a first area on a current play screen by using the touchscreen 200, obtain data related to the slide operation, where the data includes a vertical coordinate of a track of the slide operation on the touchscreen, a slide direction and a slide distance that are of the slide operation, and the first area is an area, other than an area in which a play progress bar is displayed, in an area that is on the current play screen and in which a slide operation of the user can be received;
determine, according to a correspondence between an adjustment speed and the vertical coordinate of the track of the slide operation on the touchscreen, the adjustment speed corresponding to the vertical coordinate, where a value of the adjustment speed depends on a value of the vertical coordinate, and the adjustment speed is a progress adjustment value that is for performing progress control on multimedia file play progress and that is corresponding to per unit sliding distance;
determine, according to the slide direction, a direction of progress control performed on current play progress of the multimedia file, and if the slide direction of the slide operation is leftward, determine to perform rewind progress control on the multimedia file; or if the slide direction of the slide operation is rightward, determine to perform fast-forward progress control on the multimedia file; and
determine, according to the slide distance and the adjustment speed corresponding to the vertical coordinate, a progress adjustment value that is for performing progress control on the current play progress of the multimedia file, and perform progress control on the current play progress of the multimedia file in the determined direction of progress control according to the progress adjustment value.

The touchscreen 200 may be configured to implement interaction between a user and a terminal and/or information input to the terminal. For example, the touchscreen 200 may receive a digit or character information that is entered by the user, so as to generate signal input related to user setting or function control. The touchscreen, which is also referred to as a touch panel, a touchscreen, or a touch-controlled screen, can collect an operation action of touching or approaching performed by the user on the touchscreen, for example, an operation action performed on the touchscreen or at a position near the touchscreen by the user by using a finger, a stylus, or any proper object or accessory, and drives a corresponding connection apparatus according to a preset program. Optionally, the touchscreen may include two parts: a touch detection apparatus and a touch controller. The touch detection apparatus detects a touch operation of the user, converts the detected touch operation into an electrical signal, and transmits the electrical signal to the touch controller; the touch controller receives the electrical signal from the touch detection apparatus, converts the electrical signal into touch point coordinates, and then transmits the touch point coordinates to a processor of the terminal. The touch controller may further receive and execute a command sent from the processor. In addition, the touchscreen may be of a resistance type, a capacitance type, an infrared (Infrared) type, a surface acoustic wave type, or the like.

The processor 210 is a control center of the terminal, is connected to all parts of the entire terminal by using various screens and lines, and performs various functions of the terminal and/or data processing by running or performing the software program and/or the module that are/is stored in the memory 220 and invoking data stored in the memory. The processor may include an integrated circuit (Integrated Circuit, IC for short), for example, may include a single packaged IC, or may include multiple packaged ICs having a same function or different functions. For example, the processor may include only a central processing unit (Central Processing Unit, CPU for short), or may be a combination of a GPU, a digital signal processor (Digital Signal Processor, DSP for short), and a control chip (such as a baseband chip) in the transceiver 240. In this implementation manner of the present invention, the CPU may be a single computing core, or may include multiple computing cores.

The transceiver 240 is used to establish a communication channel, so that the terminal connects to another terminal by using the communication channel. The transceiver may include a communications module such as a wireless local area network (Wireless Local Area Network, wireless LAN for short) module, a Bluetooth module, or a baseband (Base Band) module, and a radio frequency (Radio Frequency, RF for short) circuit corresponding to the communications module, and is configured to perform wireless local area network communication, Bluetooth communication, infrared communication and/or cellular communications system communication, such as Wideband Code Division Multiple Access (Wideband Code Division Multiple Access, W-CDMA for short) and/or High Speed Downlink Packet Access (High Speed Downlink Packet Access, HSDPA for short). The communications module is configured to control communication between components in the terminal, and may support direct memory access (Direct Memory Access).

In different implementation manners of the present invention, various communications modules in the transceiver generally appear in a form of an integrated circuit chip (Integrated Circuit Chip), and may be selectively combined without a need of including all communications modules and a corresponding antenna group. For example, the transceiver may include only a baseband chip, a radio frequency chip, and a corresponding antenna, so as to provide a communication function in a cellular communications system. The terminal can connect to a cellular network (Cellular Network) or the Internet (Internet) by using a wireless communication connection established by the transceiver, for example, by using wireless local area network access or WCDMA access. In some optional implementation manners of the present invention, the communications module in the transceiver, such as a baseband module may be integrated into the processor.

The memory 220 may be configured to store a software program and a module. By running the software program and the module that are stored in the memory, the processor 210 executes various function applications of the terminal and implements data processing. The memory mainly includes a program storage area and a data storage, where the program storage area may store an operating system, an application program required by at least one function, such as a sound playing program or an image playing program. The data storage may store data (such as audio data or a phone book) created according to use of the terminal, and the like. In a specific implementation manner of the present invention, the memory may include a volatile memory, such as a nonvolatile random access memory (Nonvolatile Random Access Memory, NVRAM for short), a phase change RAM (Phase Change RAM, PRAM for short), or a magetoresistive RAM (Magetoresistive RAM, MRAM for short), or may include a non-volatile memory, such as at least one magnetic disk storage device, an electrically erasable programmable read-only memory (Electrically Erasable Programmable Read-Only Memory, EEPROM for short), or a flash storage device such as an NOR flash memory (NOR flash memory) or an NAND flash memory (NAND flash memory). The non-volatile memory stores an operating system and an application program that are executed by the processor. The processor loads, from the non-volatile memory, a running program and data to a memory, and stores digital content into a massive storage apparatus. The operating system includes various components and/or drivers that are configured to control and manage a regular system task, such as memory management, storage device control, or power management, and facilitate communication between various software and hardware. In this implementation manner of the present invention, the operating system may be an Android system of Google, an iOS system developed by Apple, a Windows system developed by Microsoft, or the like; or may be an embedded operating system such as Vxworks.

The application program may include any application installed on the terminal, and includes but is not limited to a browser, an email, an instant message service, word processing, a virtual keyboard, a window widget (Widget), encryption, digital copyright management, voice recognition, voice duplication, positioning (such as a function provided by a Global Positioning System), music play, or the like.

The power supply 250 is configured to supply power to various parts of the terminal to maintain their running. Generally, the power supply may be a built-in battery such as a common lithium-ion battery or a nickel-hydride battery; and may also include an external power supply, such as a power adapter, that directly supplies power to the terminal. In some implementation manners of the present invention, the power supply may further have a wider definition. For example, the power supply may further include a power management system, a charging system, a power fault detection circuit, a power converter or inverter, a power status indicator (such as a light emitting diode), and any other components that are related to power generation, management, and distribution of the terminal.

The peripheral screen 230 may include a USB screen, an earphone screen, and the like, and may implement wired connection between the terminal and an external device, so as to perform data transmission.

According to the terminal provided in this embodiment of the present invention, a leftward/rightward slide operation performed by a user in a first area on a current play screen by using a touchscreen is received; an adjustment speed corresponding to a vertical coordinate of a track of the slide operation on the touchscreen is determined according to a correspondence between the adjustment speed and the vertical coordinate; a direction of progress control performed on current play progress of the multimedia file is determined according to the slide direction; a progress adjustment value that is for performing progress control on the current play progress of the multimedia file is determined according to the slide distance and the adjustment speed corresponding to the vertical coordinate; and progress control is performed on the current play progress of the multimedia file in the determined direction of progress control according to the progress adjustment value. Two dimensions, a horizontal dimension and a vertical dimension, of the touchscreen are used. That is, on the basis of using a width of the screen, a height of the screen is further used. A value of an adjustment speed depends on a value of a vertical coordinate of an operation performed by a user on the touchscreen. Operations performed by a user at different heights of the screen are corresponding to different adjustment speeds. The user may conveniently and flexibly select an adjustment speed by performing a simple slide operation at a specific height of the screen according to an actual need, so as to help the user better implement precise control of multimedia file play progress.

In an embodiment of the terminal provided in the present invention, the first area is divided into at least two regions in a vertical direction according to a preset rule, a vertical coordinate in each region falls within a preset threshold range, each region is corresponding to an adjustment speed, and adjustment speeds corresponding to all regions gradually increase or decrease in the vertical direction as a value of a vertical left edge changes.

That the processor is configured to determine, according to a correspondence between an adjustment speed and the vertical coordinate of the track of the slide operation on the touchscreen, the adjustment speed corresponding to the vertical coordinate is specifically:
the processor is configured to determine an adjustment speed corresponding to a first region in the at least two regions when the vertical coordinate of the track of the slide operation on the touchscreen falls in the first region.

Further, in another embodiment of the terminal provided in the present invention, the touchscreen is further configured to: when an operation performed by the user on the current play screen is received, display, in the at least two regions, adjustment speeds corresponding to the regions for prompting.

In another embodiment of the terminal provided in the present invention, that the first area is divided into at least two regions in a vertical direction according to a preset rule is specifically:
dividing the first area into regions in the vertical direction according to total duration of the multimedia file that is currently being played; or
dividing the first area into regions in the vertical direction according to remaining duration of the multimedia file that is currently being played; or
dividing the first area into regions in the vertical direction according to total duration and remaining duration that are of the multimedia file that is currently being played.

In this embodiment, cell division may be performed by the processor 210.

The terminal provided in this embodiment of the present invention may be configured to implement the method provided in the foregoing method embodiment.

It should be noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a..." does not, without more constraints, preclude the existence of additional identical elements in the process, method, article, or apparatus that includes the element.

Persons of ordinary skill in the art should understand that all or part of the steps of the method specified in any foregoing embodiment may be implemented by a program instructing related hardware. The program may be stored in a terminal readable storage medium such as a FLASH, or an EEPROM. When the program runs, the program executes all or part of the steps described above.

In the foregoing specific implementation manners, the objective, technical solutions, and benefits of the present invention are further described in detail. It should be understood that different embodiments can be combined. The foregoing descriptions are merely specific implementation manners of the present invention, but are not intended to limit the protection scope of the present invention. Any combination, modification, equivalent replacement, or improvement made without departing from the spirit and principle of the present invention should fall within the protection scope of the present invention.

## Claims

1. A method for controlling multimedia file play progress, wherein the method comprises:
receiving, by a terminal in a process of playing a multimedia file, a leftward/rightward slide operation performed by a user in a first area on a current play screen by using a touchscreen, wherein the first area is an area, other than an area in which a play progress bar is displayed, in an area that is on the current play screen and in which a slide operation of the user can be received;
obtaining data related to the slide operation, wherein the data comprises a vertical coordinate of a track of the slide operation on the touchscreen, and a slide direction and a slide distance that are of the slide operation;
determining, according to a correspondence between an adjustment speed and the vertical coordinate of the track of the slide operation on the touchscreen, the adjustment speed corresponding to the vertical coordinate, wherein a value of the adjustment speed depends on a value of the vertical coordinate, and the adjustment speed is a progress adjustment value that is for performing progress control on multimedia file play progress and that is corresponding to per unit sliding distance;
determining, according to the slide direction, a direction of progress control performed on current play progress of the multimedia file, and if the slide direction of the slide operation is leftward, determining to perform rewind progress control on the multimedia file; or if the slide direction of the slide operation is rightward, determining to perform fast-forward progress control on the multimedia file; and
determining, according to the slide distance and the adjustment speed corresponding to the vertical coordinate, a progress adjustment value that is for performing progress control on the current play progress of the multimedia file, and performing progress control on the current play progress of the multimedia file in the determined direction of progress control according to the progress adjustment value.

2. The method according to claim 1, wherein the first area is divided into at least two regions in a vertical direction according to a preset rule, a vertical coordinate in each region falls within a preset threshold range, each region is corresponding to an adjustment speed, and adjustment speeds corresponding to all regions gradually increase or decrease in the vertical direction as a value of a vertical left edge changes; and
the determining, according to a correspondence between an adjustment speed and the vertical coordinate of the track of the slide operation on the touchscreen, the adjustment speed corresponding to the vertical coordinate is specifically:
determining an adjustment speed corresponding to a first region in the at least two regions when the vertical coordinate of the track of the slide operation on the touchscreen falls in the first region.

3. The method according to claim 2, wherein the method further comprises: when an operation performed by the user on the current play screen is received, displaying, in the at least two regions, adjustment speeds corresponding to the regions for prompting.

4. The method according to claim 2 or 3, wherein that the first area is divided into at least two regions in a vertical direction according to a preset rule is specifically:
dividing the first area into regions in the vertical direction according to total duration of the multimedia file that is currently being played; or
dividing the first area into regions in the vertical direction according to remaining duration of the multimedia file that is currently being played; or
dividing the first area into regions in the vertical direction according to total duration and remaining duration that are of the multimedia file that is currently being played.

5. A terminal for controlling multimedia file play progress, wherein the terminal comprises:
a touchscreen, configured to display content of a multimedia file played on the terminal; and
a processor, configured to: after receiving, in a process of playing the multimedia file, a leftward/rightward slide operation performed by a user in a first area on a current play screen by using the touchscreen, obtain data related to the slide operation, wherein the data comprises a vertical coordinate of a track of the slide operation on the touchscreen, a slide direction and a slide distance that are of the slide operation, and the first area is an area, other than an area in which a play progress bar is displayed, in an area that is on the current play screen and in which a slide operation of the user can be received;
determine, according to a correspondence between an adjustment speed and the vertical coordinate of the track of the slide operation on the touchscreen, the adjustment speed corresponding to the vertical coordinate, wherein a value of the adjustment speed depends on a value of the vertical coordinate, and the adjustment speed is a progress adjustment value that is for performing progress control on multimedia file play progress and that is corresponding to per unit sliding distance;
determine, according to the slide direction, a direction of progress control performed on current play progress of the multimedia file, and if the slide direction of the slide operation is leftward, determine to perform rewind progress control on the multimedia file; or if the slide direction of the slide operation is rightward, determine to perform fast-forward progress control on the multimedia file; and
determine, according to the slide distance and the adjustment speed corresponding to the vertical coordinate, a progress adjustment value that is for performing progress control on the current play progress of the multimedia file, and perform progress control on the current play progress of the multimedia file in the determined direction of progress control according to the progress adjustment value.

6. The terminal according to claim 5, wherein the first area is divided into at least two regions in a vertical direction according to a preset rule, a vertical coordinate in each region falls within a preset threshold range, each region is corresponding to an adjustment speed, and adjustment speeds corresponding to all regions gradually increase or decrease in the vertical direction as a value of a vertical left edge changes; and
that the processor is configured to determine, according to a correspondence between an adjustment speed and the vertical coordinate of the track of the slide operation on the touchscreen, the adjustment speed corresponding to the vertical coordinate is specifically:
the processor is configured to determine an adjustment speed corresponding to a first region in the at least two regions when the vertical coordinate of the track of the slide operation on the touchscreen falls in the first region.

7. The terminal according to claim 6, wherein the touchscreen is further configured to: when an operation performed by the user on the current play screen is received, display, in the at least two regions, adjustment speeds corresponding to the regions for prompting.

8. The terminal according to claim 5 or 6, wherein that the first area is divided into at least two regions in a vertical direction according to a preset rule is specifically:
dividing the first area into regions in the vertical direction according to total duration of the multimedia file that is currently being played; or
dividing the first area into regions in the vertical direction according to remaining duration of the multimedia file that is currently being played; or
dividing the first area into regions in the vertical direction according to total duration and remaining duration that are of the multimedia file that is currently being played.
